# EUROPÄISCHE PATENTANMELDUNG

(11) **EP 2 899 630 A1**
(43) Veröffentlichungstag der Anmeldung: **29.07.2015**
(21) Anmeldenummer: 14000261.9
(22) Anmeldetag: 24.01.2014
(51) Int. Cl.: G06F 9/44

(54) **Verfahren zum Generieren von Programmcode**

(71) Anmelder: ABB Technology AG, 8050 Zürich (CH)
(72) Erfinder: Gohr, Katharina, 69469 Weinheim (DE); Jeske, Ralf, 32469 Petershagen (DE); Barth, Mike, 76275 Ettlingen (DE)
(74) Vertreter: Kock, Ina

(57) **Zusammenfassung**

Die Erfindung betrifft ein Verfahren zum Generieren von Programmcode aus einem computerlesbaren zweidimensionalen matrixähnlichen Ursache- Wirkungs- Daten-format (10, 60, 96), wobei eine logische Vorverarbeitung berücksichtigt ist. Die logische Verknüpfung zwischen einer oder mehreren Ursachen und Wirkung kann ein- oder mehrstufig ausgeführt sein. Die logische Verknüpfung jeder Stufe umfasst beispielsweise "UND"-Verknüpfungen, "ODER"-Verknüpfungen oder auch einen Zeitverzug.

## Beschreibung

Die Erfindung betrifft ein Verfahren zum Generieren von Programmcode aus einem computerlesbaren zweidimensionalen matrixähnlichen Datenformat, bei welchem jeweilige Ursachen längs der ersten Dimensionsrichtung und jeweilige Wirkungen längs der zweiten Dimensionsrichtung vorgesehen sind, wobei jede Wirkung nur einmalig vorgesehen ist, wobei eine logische Beziehung zwischen Ursache und Wirkung sich aus einem dem jeweiligen Kreuzungspunkt zwischen jeweiligen Zeilen und Spalten des matrixähnlichen Datenformates zugeordneten Zuordnungsblock ergibt, wobei ein Zuordnungsblock eine logische Vorverarbeitung beinhalten kann, wobei in diesem Fall eine mehrschichtige Zuordnung zwischen Ursache und Wirkung vorgenommen ist, bei der in der letzten Schicht ein Werteelement vorgesehen ist, das mit der jeweiligen Wirkung verknüpft ist und das logisch mit wenigstens einem Werteelement wenigstens einer darunterliegenden Zwischenschicht verbunden ist, wobei in der ersten Zwischenschicht wenigstens ein Werteelement vorgesehen ist, welchem eine der Ursachen als Eingangsgröße zugeführt ist, wobei eine Rechenvorrichtung zur Durchführung des Verfahrens vorgesehen ist.

Es ist allgemein bekannt, dass Spezifikationen für ein Automatisierungssystem, beispielsweise innerhalb einer Produktionsanlage, in Form eines Freitextes, von Tabellen beziehungsweise auch von schematischen Ablaufdiagrammen vorliegen können, welche zur weiteren Umsetzung eines derartigen Automatisierungssystems von dem zukünftigen Betreiber an einen entsprechenden Lieferanten weitergegeben werden. Bezüglich etwaiger Kontrollaspekte eines Automatisierungssystems sind sogenannte "Ursache- Wirkungs- Diagramme" ein übliches Datenformat, um steuerungstechnische Abhängigkeiten formell zu beschreiben. Dies ist letztendlich ein zweidimensionales matrixähnliches Datenformat, bei welchem in den Zeilen jeweilige Ursachen und in den Spalten entsprechende Wirkungen beschrieben sind, wobei Zeilen und Spalten selbstverständlich auch vertauscht sein können. Eine Ursache kann beispielsweise der Wert eines Sensorsignals sein, welchem einer jeweiligen Wirkung zugeordnet ist, beispielsweise der Betätigung eines Aktuators. Ob und welcher Zusammenhang zwischen einer Ursache und einem jeweiligen Effekt gegeben ist, ist durch einen jeweiligen Zuordnungswert beziehungsweise Zuordnungsschlüssel an den Kreuzungspunkten der Matrix vorgegeben. So kann das Überschreiten eines Schwellwertes als Ursache beispielsweise das Öffnen eines ersten und zweiten Ventils sowie das Schließen eines dritten Ventils zur Folge haben. Vorteil an einem derartigen matrixähnlichen Format ist, dass dieses sowohl gut von einer menschlichen Person gelesen werden kann als auch, dass es sich gut in computerlesbarer Form als Datei abspeichern lässt.

Derartige matrixähnliche Datenformate lassen sich zum Beispiel als Tabelle in einem Tabellenkalkulationsprogramm wie EXCEL der Firma Microsoft darstellen und als jeweilige Datei auf einem Datenträger oder in einem Arbeitsspeicher abspeichern und in dieser Form auch austauschen. Dies ermöglicht aufgrund der einfachen Zuordnungsstruktur zwischen Ursache und Wirkung auch ein darauf basiertes vorzugsweise automatisiertes Erstellen von Programmcode für ein Steuersystem, welches dafür vorgesehen ist, die Komponenten eines entsprechenden Automatisierungssystems zu steuern und zu überwachen. Somit ist es dem Lieferanten eines Automatisierungssystems möglich, aus einem vom Kunden bereitgestelltem Ursache- Wirkungs- Diagramm direkt zumindest Teile eines Programmcodes zu erzeugen, welcher im Weiteren direkt für das zu liefernde Steuerungs- beziehungsweise Automatisierungssystem verwendet werden kann.

Ein derartiges System umfasst typischerweise eine Steuerungssoftware, welche auf einer oder auch auf mehreren Datenverarbeitungsvorrichtungen wie einem handelsüblichen PC läuft und welche anhand beispielsweise der Ausgangssignale (Ursache) von einem Teil der Systemkomponenten einen anderen Teil der Systemkomponenten steuert (Wirkung). Die Patentschriften US 6,941,261 B1 oder auch US 6,369,836 offenbaren exemplarische Beispiele für die aufgezeigte Thematik.

Es sind auch erweiterte Matrixformate bekannt, bei welchen eine entsprechende logische Vorverarbeitung zwischen jeweiligen Ursachen und einer jeweiligen Wirkung darstellbar ist, beispielsweise das Anschalten eines Motors nur unter der Voraussetzung, dass ein erstes Sensorsignal einen ersten Schwellwert überschritten hat und ein zweites Sensorsignal einen zweiten Schwellwert, wobei beide Signale wenigstens für einen Mindestzeitraum anliegen müssen.

Nachteilig an derartigen erweiterten Matrixformaten ist, dass bisher aufgrund der großen Komplexität eine direkte Umsetzung in einen Programmcode nicht realisiert war. Hierdurch ist bei der Realisierung eines Steuerungssystems in nachteiliger Weise ein erhöhter manueller Aufwand in Kauf zu nehmen. Ausgehend von diesem Stand der Technik ist es Aufgabe der Erfindung, ein Verfahren zum Generieren von Programmcode bereitzustellen, welches die zuvor genannten Nachteile vermeidet.

Diese Aufgabe wird gelöst durch ein Verfahren zum Generieren von Programmcode der eingangs genannten Art. Dieses ist gekennzeichnet durch folgende Schritte:
- sequentielles Überprüfen der Zuordnungsblöcke der Wirkungen des matrixähnlichen Datenformates, zu welchen Ursachen ein jeweiliger Zusammenhang gegeben ist,
- für den Fall, dass ein direkter Zusammenhang besteht:
   - Erstellen eines Programmbausteines mit direkter Verknüpfung zwischen Ursache und Wirkung,
- für den Fall, das ein logisch verknüpfter Zusammenhang besteht:
   - Analysieren des jeweiligen Zuordnungsblockes beginnend mit dem Werteelement der letzten Schicht,
   - Überprüfen, von welchen Eingangsgrößen und jeweiligen logischen Bedingungen dieses Werteelement abhängt,
   - Erstellen eines entsprechend verknüpften Programmbausteines für jede logische Bedingung, wobei die jeweilige logische Bedingung durch die Art des Programmbausteins berücksichtigt ist,
   - Überprüfung, von welchen Eingangsgrößen und jeweiligen logischen Bedingungen die Werteelemente in der darunterliegenden Zwischenschicht abhängig sind,
   - Erstellen eines entsprechenden verknüpften Programmbausteines für jede logische Bedingung, wobei die jeweilige logische Bedingung durch die Art des Programmbausteins berücksichtigt ist,
   - Wiederholung bis die erste Zwischenschicht erreicht ist,
- Abspeichern der Programmbausteine als Programmcode

Die Grundidee der Erfindung besteht darin - basierend auf einem entsprechend spezifizierten matrixähnlichen Datenformat - einen jeweiligen mehrschichtigen Zuordnungsblock in die automatisierte Generierung von Programmcode einzubeziehen und einen Zuordnungsblock beginnend mit der in einem Element der Ausgangsschicht repräsentierten Wirkung schichtweise bis zur ersten Zwischenschicht zu analysieren. Jeder logischen Verknüpfung wird hierbei im Programmcode ein Programmbaustein zugeordnet, beispielsweise eine "UND" oder "ODER" Verknüpfung oder auch ein Zeitverzug. Ein Programmbaustein weist typischerweise einen Ausgang und einen oder mehrere Eingänge auf, welche mit den Ein- beziehungsweise Ausgängen der Programmbausteine der angrenzenden Schichten verbunden sind. Die Eingänge der Elemente der Eingangsschicht sind mit jeweiligen Ursachen verbunden und das Element der Ausgangsschicht mit einer jeweiligen Wirkung.

Ein Zuordnungsblock selbst kann letztendlich auch als eigenständiges matrixähnliches Format aufgefasst werden. Jeweilige Spalten entsprechen beispielsweise jeweiligen Schichten und innerhalb jeweiliger Zeilen wird angenommen, dass der Ausgang eines Elementes einer Zwischenschicht und der Eingang eines Elementes der darüber liegenden Schicht miteinander verbunden sind. An den Kreuzungspunkten sind bedarfsweise logische Verknüpfungen wie "UND" oder "ODER" vorgesehen. So lässt sich durch strukturierte Anordnung der Zeilen und Spalten eines jeweiligen Zuordnungsblockes eine logische Vorverarbeitung in besonders einfacher Weise darstellen.

Ein Zuordnungsblock beziehungsweise ein entsprechender Verweis auf diesen ist prinzipiell an dem Kreuzungspunkt genau einer Ursache mit genau einer Wirkung vorgesehen. Dieser Kreuzungspunkt kann letztendlich als Ausgangselement der letzten Schicht eines Zuordnungsblockes angesehen werden. Es ist jedoch auch denkbar, dies in dem matrixähnlichen Datenformat derart darzustellen, dass ein Zuordnungsblock an mehreren Kreuzungspunkten mehrerer Ursachen für genau eine Wirkung vorgesehen ist. Hierbei sind in den jeweiligen Kreuzungspunkten logische Zuordnungen vorgesehen, welche jeweils durch einen Programmbaustein zu repräsentieren sind, und deren Ausgänge beispielsweise durch eine fest vorgegebene UNDbeziehungsweise ODER- Verknüpfung mit einem Ausgangselement verknüpft sind, welches seinerseits mit einer jeweiligen Wirkung verknüpft ist. In diesem Fall wäre dann die betreffenden Elemente der Spalte bzw. Zeile als erste Zwischenschicht aufzufassen, die dann über den Bezug des Zuordnungsblockes und ein fiktives Element einer fiktiven Ausgangsschicht mit der Wirkung verbunden sind.

Auf diese Weise ist es ermöglicht, aus einem entsprechend standardisierten Matrixformat einen Programmcode zu generieren.

Gemäß einer weiteren Variante des erfindungsgemäßen Verfahrens ist der Ausgang des Werteelementes der letzten Schicht wenigstens eines Zuordnungsblocks als zusätzliche Ursache in dem matrixähnlichen Datenformat bereitgestellt. Dies ermöglicht in vorteilhafter Weise eine sequentielle Verknüpfung von mehreren Programmbausteinen. Für den Fall, dass beispielsweise der Start eines Produktionsprozesses erst dann ermöglicht sein soll, wenn ein Ventil geschlossen ist, dieses aber seinerseits von mehreren logischen Verknüpfungen eines vorgehenden Zuordnungsblockes abhängig ist, wird der Ausgang des vorgehenden Zuordnungsblockes nicht nur als Wirkung zum Schließen des Ventils verwendet, sondern auch als - gegebenenfalls auch modifiziertes - Eingangssignal für den Zuordnungsblock, von welchem der Start des Produktionsprozesses abhängt. Somit ist bei Anwendung einer entsprechenden "UND" Verknüpfung sichergestellt, dass erst das Signal zum Schließen des Ventils vorliegen muss, bevor der der Produktionsprozess gestartet werden kann.

Gemäß einer besonders bevorzugten Variante des erfindungsgemäßen Verfahrens wird wenigstens einer der Programmbausteine aus einer Programmbausteinbibliothek entnommen. Eine Programmbausteinbibliothek beinhaltet jeweiligen vorgefertigten Programmcode, beispielsweise in Form eines ASCII Textbausteines, für verschiedenste logische Verknüpfungen, wobei deren Ein- und Ausgänge noch entsprechend individuell zu verschalten sind, also programmtechnisch letztendlich Variablennamen anzupassen sind, durch welche eine Verschaltung der Logikbausteine bestimmt ist.

Gemäß einer bevorzugten Variante des erfindungsgemäßen Verfahrens beinhaltet die Programmbausteinbibliothek wenigstens eine der logischen Verknüpfungen "UND", "ODER", "EXCLUSIV ODER", "NICHT", "Addition", "Subtraktion", "Multiplikation", "Division", "Selektion", "Flip-Flop" oder "Zeitverzug". Mit diesen Standardbausteinen lässt sich bei entsprechender Verschaltung prinzipiell jede Art von logischer Verknüpfung darstellen. Selbstverständlich ist es aber auch möglich, dass auch eine Gruppe von bereits miteinander verknüpften Programmbausteinen als vorgefertigter Programmbaustein zur Verfügung gestellt ist.

Gemäß einer besonders bevorzugten Form des erfindungsgemäßen Verfahrens wird das computerlesbare zweidimensionale matrixähnliche Datenformat zumindest in seiner Grundstruktur mittels eines grafischen Editors erzeugt. Durch eine graphische Eingabe der Grundstruktur der Matrix sind die wesentlichen Elemente für das matrixähnliche Datenformat auf einfache Weise eingebbar. Erfindungsgemäß ist in einem nachfolgenden Schritt vorgesehen, dass das computerlesbare zweidimensionale matrixähnliche Datenformat mittels beispielsweise eines Texteditors manipuliert wird. Somit wird die Grundstruktur des matrixähnlichen Datenformates auf einfache Weise grafisch erstellt und die Detailbeziehungen, welche grafisch sehr umständlich einzugeben wären, direkt in dem matrixähnlichen Datenformat manipuliert. Das Erstellen eines vollständigen matrixähnlichen Datenformates wird auf diese Weise vorteilhaft vereinfacht.

Optional kann das zweidimensionale matrixähnliche Datenformat so abgeändert werden, dass in einer Richtung oder auch beiden Richtungen nicht nur Ursachen und Wirkungen dargestellt werden, sondern auch zusätzliche Zeilen/Spalten zur Untergliederung, welche letztendlich einen Kommentar darstellen und zumeist nicht aktiv den eigentlichen Inhalt des matrixähnlichen Datenformates bestimmen. "Überschriften" zur Gliederung können in vorteilhafter Weise die Übersichtlichkeit steigern. Derartige Gliederungszeilen können bei einer Schrittkette die einzelnen Schritte unterteilen/darstellen. Es ist auch möglich, verschiedene Zeilen verschiedene Bedeutung zukommen zu lassen (Unterscheidung zwischen "Action" und "Transition" bei der Ablaufkette.) und aufgrund der unterschiedlichen Bedeutung verschiedene Verschaltmöglichkeiten zu auszuschließen.

Entsprechend einer weiteren Ausgestaltungsform des erfindungsgemäßen Verfahrens wird aus dem computerlesbaren zweidimensionalen matrixähnlichen Datenformat eine editierbare grafische Form erzeugt. Auch dieser Schritt dient der Vereinfachung der Erstellung eines vollständig mit jeweiligen Werten ausgefüllten matrixähnlichen Datenformates. Einige Sachverhalte lassen sich einfacher in grafischer Form, andere einfacher direkt in das matrixähnliche Datenformat eingeben. Durch den iterativen Wechsel zwischen den Eingabemöglichkeiten lässt sich eine Eingabeprozedur für ein matrixähnliches Datenformat in vorteilhafter Weise beschleunigen.

In besonders vorteilhafter Weise wird die editierbare grafische Form über den Zwischenschritt der Generierung von Programcode erzeugt, aus welchem seinerseits mittels handelsüblicher Editoren eine grafische Form erzeugbar ist. Auch hier ist vorgesehen, dass in der editierbaren grafischen Form Änderungen vorgenommen werden, um so in einem iterativen Prozess ein jeweiliges matrixähnliches Datenformat mit entsprechenden Werten und Zuordnungsblöcken zu versehen.

Gemäß einer weiteren Ausgestaltungsform des erfindungsgemäßen Verfahrens werden die zuvor genannten Schritte bedarfsweise so lange wiederholt werden, bis alle gewünschten Ursachen, Wirkungen und Zuordnungsblöcke des matrixähnlichen Datenformates definiert sind.

Gemäß einer weiteren Ausgestaltungsvariante des erfindungsgemäßen Verfahrens sind die Zuordnungsblöcke mit ihren Schichten in das zweidimensionale matrixähnliche Datenformat integriert. In einem solchen Fall sind zusätzliche Zeilen beziehungsweise Spalten vorgesehen, in welchen keine direkte Ursache- Wirkung Beziehung definiert ist, sondern welche beispielsweise Zwischenschichten von jeweiligen Zuordnungsblöcken beinhalten. Ein Zuordnungsblock muss hierbei nicht zwangsläufig einen geschlossenen Bereich einnehmen, er kann prinzipiell über das gesamte matrixähnliche Datenformat verteilt sein. Die Zuordnung zwischen Funktionsblock und der entsprechenden Wirkung erfolgt typischerweise über einen Verweis im jeweiligen Kreuzungspunkt der Ursache- Wirkungs- Spalten, welcher sich direkt auf den jeweiligen Funktionsblock bezieht.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein exemplarisches matrixähnliches zweidimensionales Datenformat,
- Fig. 2: eine exemplarische logische Vorverarbeitung,
- Fig. 3: ein exemplarisches matrixähnliches Datenformat,
- Fig. 4: eine erste exemplarische grafische Form (Logikschaltbild),
- Fig. 5: eine zweite exemplarische grafische Form (Ablaufdiagramm) sowie
- Fig. 6: ein exemplarisches Vorgehen bei dezentralisierter Erstellung von Programmcode

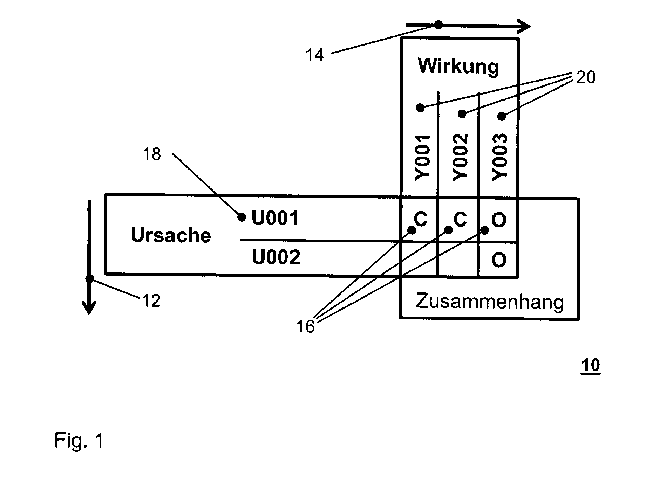

Figur 1 zeigt ein exemplarisches matrixähnliches zweidimensionales Datenformat in einer Darstellung 10, bei welchem beispielhaft eine reine Ursache- Wirkungsbeziehung dargestellt ist. Hierbei sind jeweilige Ursachen 18 in einer ersten Dimensionsrichtung 12 als Zeilen und jeweilige Wirkungen 20 in einer zweiten Dimensionsrichtung 14 als Spalten dargestellt. In den jeweiligen Kreuzungspunkten 16 erfolgt dann mittels eines Zuordnungsschlüssels eine jeweilige Zuordnung, wobei in diesem Fall "C" für das Schließen eines Ventils, "O" für das Öffnen eines Ventils und ein unausgefüllter Kreuzungspunkt für keinen Zusammenhang steht.

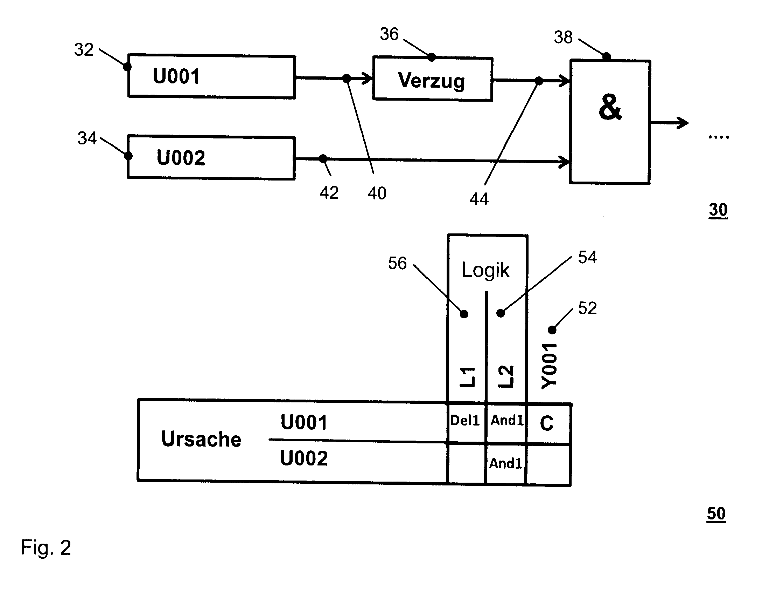

Figur 2 zeigt eine exemplarische logische Vorverarbeitung in einer Darstellung 30. Eingangsgrößen für die Vorverarbeitung sind in diesem Fall die Größen U001 32 und U002 34, welche beispielhaft als rein binär angenommen werden. Selbstverständlich ist es erfindungsgemäß vorgesehen, bedarfsweise einen Schwellwertkomparator zu verwenden, welcher bei Überschreiten eines Grenzwertes eines analogen Eingangssignals 32, 34 ein entsprechendes binäres Triggersignal ausgibt, welches dann entsprechend weiter verarbeitet wird. Das Signal U001 ist über eine Verknüpfung 40 mit einer ersten logischen Bedingung 36, in diesem Fall einem Zeitverzug, verbunden. Nach einem entsprechenden Zeitverzug wird das Eingangssignal U001 32 dann mittels einer Verknüpfung 44 an eine zweite logische Bedingung 38 weitergeführt, welche in diesem Fall eine "UND" Verknüpfung mit dem Eingangssignal U002 34 darstellt, das über eine Verknüpfung 42 mit der "UND" Verknüpfung verschaltet ist.

In dem darunter befindlichen Bildteil ist eine zugehörige Darstellung dieser Logik in einem Zuordnungsblock 50 dargestellt. Dieser hat eine ebenfalls matrixähnliche Struktur, bei welcher in den Zeilen die für den Zuordnungsblock 50 relevanten Ursachen als Eingangsgröße und in den Spalten die verschiedenen Schichten des Zuordnungsblockes dargestellt sind. Eine erste Zwischenschicht L1 56 ist zeilenweise entsprechenden Ursachen U001 und U002 zugeordnet. In dem Kreuzungspunkt der Zeile, welche die Ursache U001 repräsentiert, mit der Spalte der ersten Zwischenschicht 56 ist ein Zuordnungsschlüssel für ein zu verwendendes Logikelement vorgesehen. Dieser Schlüssel trägt in diesem Fall die Bezeichnung "Del1", was für einen Zeitverzug steht.

Die zweite Ursache U002 weist in dem Kreuzungspunkt ihrer Zeile mit der Spalte der ersten Zwischenschicht 56 keinen Zuordnungsschlüssel auf und wird daher direkt, wie auch der Ausgang des Verzugselementes "Del1", an den jeweiligen Eingang der zweiten Zwischenschicht L2 54 weitergeleitet. In zweiten Zwischenschicht L2 54 erfolgt eine logische Verknüpfung derjenigen beiden Eingangssignale, welche mit einem Zuordnungsschlüssel "AND1" gekennzeichnet sind. Ein Element ohne Zuordnungsschlüssel würde bei einer logischen Verknüpfung nicht berücksichtigt werden. Das Ergebnis dieser logischen Verknüpfung wird in der Ausgangsschicht Y001 52 zur Verfügung gestellt. Hierbei ist lediglich ein einziges Element benötigt, welches dann über den beispielhaften Zuordnungsschlüssel "C", welcher für das Schließen eines Ventils steht, mit der gewünschten Wirkung verbunden ist. Deshalb kann die Ausgangsspalte beziehungsweise das Ausgangselement eines Zuordnungsblocks letztendlich direkt in den Kreuzungspunkt einer Ursache- Wirkungsmatrix eingetragen werden, wobei der Zuordnungsschlüssel noch direkt oder indirekt einen Verweis zu den Elementen des restlichen Zuordnungsblocks beinhalten muss. Dies kann beispielsweise durch die direkte Anordnung des Zuordnungsblocks im matrixähnlichen Datenformat erfolgen, oder aber auch durch eine entsprechende Nomenklatur des Zuordnungsschlüssels.

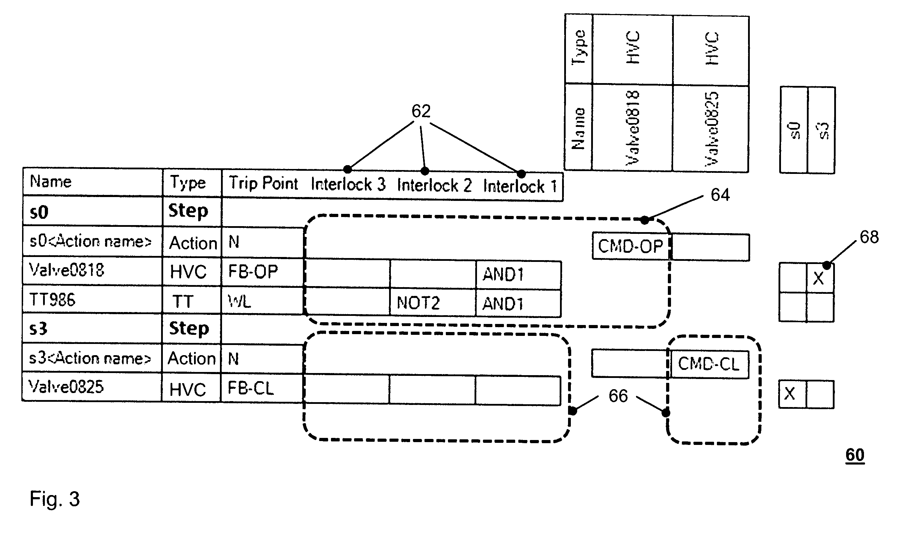

Figur 3 zeigt ein exemplarisches matrixähnliches Datenformat 60 in einer grafischen Darstellung, welche sich in einer entsprechenden Datenstruktur auch direkt in elektronischer Form speichern lässt. Gezeigt sind zwei Zuordnungsblöcke 64, 66, durch welche entsprechende logische Verknüpfungen zwischen jeweiligen in Zeilen dargestellten Ursachen und in Spalten dargestellten Wirkungen beschrieben sind, wobei der Zuordnungsblock 64 grafisch zusammenhängend dargestellt ist und der Zuordnungsblock 66 über das matrixähnliche Datenformat verteilt ist. Die Zwischenschichten 62 der Zuordnungsblöcke sind mit der Bezeichnung "Interlock" versehen und auf der linken Seite der eigentlichen Ursache- Wirkungs- Matrix vorangestellt. Auf diese Weise lassen sich Zuordnungsblöcke sehr einfach in das matrixähnliche Datenformat integrieren. Der Ausgang des ersten Zuordnungsblocks ist mit einem Ventil 0818 verbunden, welches durch den Zuordnungsschlüssel "CMD-OP" in Abhängigkeit des Ausgangs des Zuordnungsblocks geöffnet wird. Der Ausgang des zweiten Zuordnungsblocks 66 ist mit einem Ventil 0825 verbunden, welches durch den Zuordnungsschlüssel "CMD-CL" in Abhängigkeit des Ausgangs des Zuordnungsblocks 66 geschlossen wird.

Die in der Fig. 3 gezeigte matrixähnliche Datenstruktur ist blockweise aufgebaut und umfasst einen Funktionsblock "s0" und einen Funktionsblock "s3", welchen jeweils der Zuordnungsblock 64 beziehungsweise 66 zugeordnet ist. An der rechten Seite des matrixähnlichen Datenformates sind sogenannte Weiterschaltbedingungen 68 vorgesehen, in diesem Fall besteht die Bedingung darin, dass der Block "s3" nur abgearbeitet werden darf, wenn zuvor der Block "s0" abgearbeitet wurde und umgekehrt. Hierbei wird letztendlich der Ausgang des logisch vorangehenden Zuordnungsblocks 64, 66 dem Eingang des nachfolgenden Zuordnungsblocks 66, 64 als Eingangsursache zur Verfügung gestellt. Durch eine derartige Kreuzverschaltung ist ein alternierend abhängiges Verhalten der Blöcke "s0" und "s3" erreicht, ähnlich einer Flipflop Schaltung. Im Übrigen ist durch eine derartige Verschaltung auch eine Schrittkette zum z.B. Hochfahren und Runterfahren von Anlagen oder zur Steuerung von Batch-Prozessen ermöglicht.

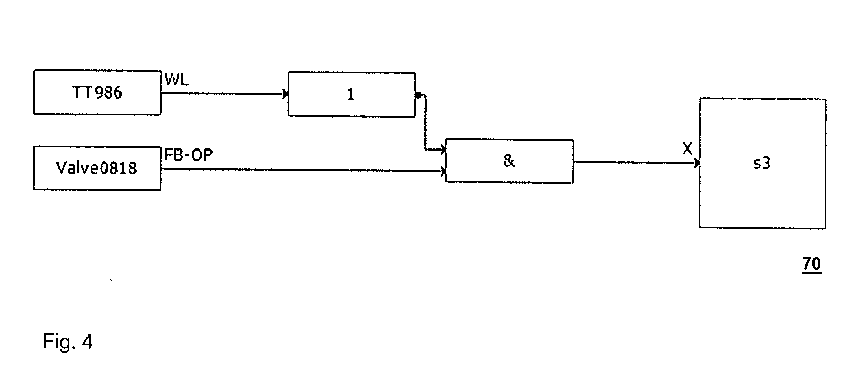

Die Figur 4 zeigt in einer Darstellung 70 die logische Vorverarbeitung des zuvor gezeigten Zuordnungsblocks 64 in einer exemplarischen grafischen Form, einem Logikschaltbild.

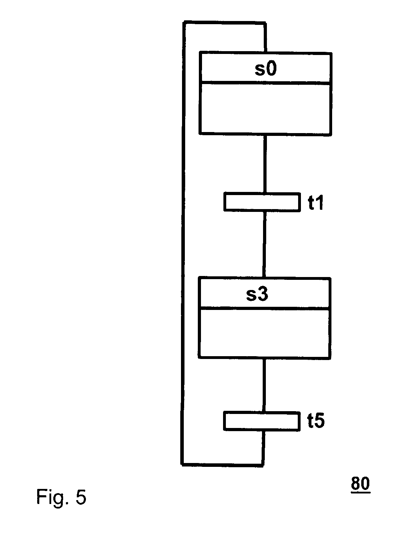

Die Figur 5. zeigt in einer Darstellung 80 in ebenfalls einer exemplarischen grafischen Form, einem Ablaufdiagramm, das zuvor erwähnte alternierend abhängige Verhalten der Blöcke "s0" und "s3".

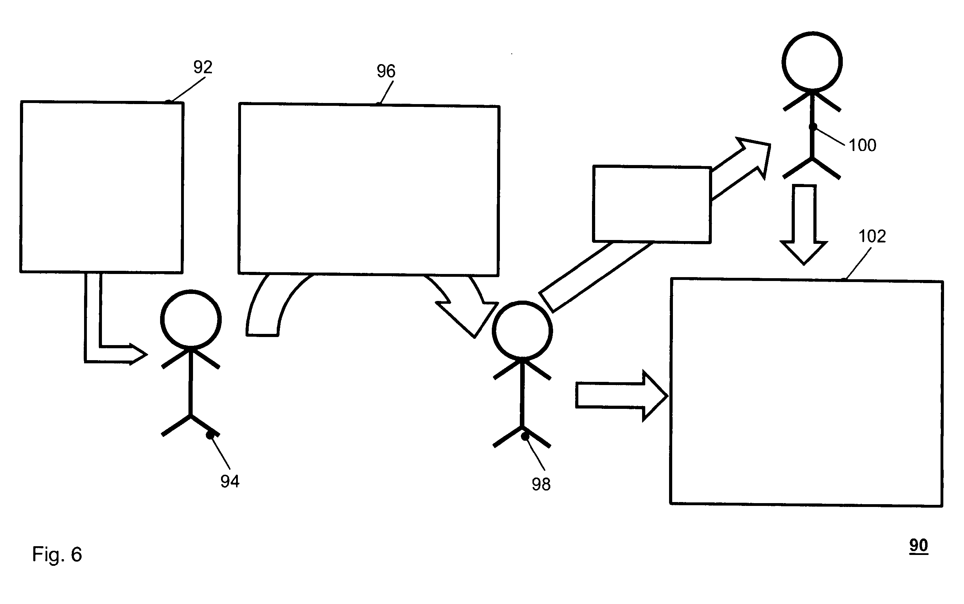

Die Figur 6 zeigt ein exemplarisches Vorgehen bei dezentralisierter Erstellung von Programmcode in einer Darstellung 90. Dies ist ein Beispiel, wie durch das Erfindungsgemäße Verfahren das Erzeugen von Programmcode vereinfacht wird. Während einer Spezifikationsphase beziehungsweise Umsetzungsphase eines Automatisierungsprojektes liegt üblicherweise ein Rohrleitungs- und Instrumentenfließschema 92 in einer computerlesbaren Form vor. Dies wird durch den zukünftigen Betreiber 94 - vorzugsweise mittels eines entsprechenden auf einer Rechenvorrichtung installierten Konvertierungsprogrammes - zunächst in ein entsprechend den Randbedingungen des erfindungsgemäßen Verfahrens spezifiziertes matrixähnliches Datenformat 96 umgewandelt, welches bereichsweise durchaus auch unvollständig sein kann und vielmehr nur eine Grobstruktur vorgibt.

Das matrixähnliche Datenformat 96 wird - beispielsweise auf einem elektronischen Datenträger - einem Anbieter 98 von Automatisierungssystemen weitergereicht, welcher daraus mittels Anwendung des erfindungsgemäßen Verfahrens auf einer Rechenvorrichtung automatisch einen Programmcode generiert 102. Hierbei ist das Detailwissen des Anbieters in beispielhaften Iterationsphasen in besonders einfacher Weise verwendbar, um ein gegebenenfalls unvollständig ausgefülltes matrixähnliches Datenformat zu komplettieren. Die gute Austauschbarkeit des matrixähnlichen Datenformates erlaubt auch in einfacher Weise die Weitergabe an Drittanbieter 100, womit die Erstellung von Programmcode in vorteilhafter Weise weiter vereinfacht ist.

### Bezugszeichenliste

- 10: exemplarisches matrixähnliches zweidimensionales Datenformat
- 12: erste Dimensionsrichtung
- 14: zweite Dimensionsrichtung
- 16: Kreuzungspunkte
- 18: Ursachen
- 20: Wirkungen
- 30: exemplarische logische Vorverarbeitung
- 32: erste Eingangsgröße für Vorverarbeitung
- 34: zweite Eingangsgröße für Vorverarbeitung
- 36: erste logische Bedingung
- 38: zweite logische Bedingung
- 40: erste Verknüpfung
- 42: zweite Verknüpfung
- 44: dritte Verknüpfung
- 50: exemplarischer Zuordnungsblock
- 52: Ausgangsschicht von Zuordnungsblock
- 54: zweite Zwischenschicht von Zuordnungsblock
- 56: erste Zwischenschicht von Zuordnungsblock
- 60: exemplarisches matrixähnliches Datenformat
- 62: Zwischenschichten
- 64: erster exemplarischer Zuordnungsblock
- 66: zweiter exemplarischer Zuordnungsblock
- 68: Weiterschaltbedingung
- 70: erste exemplarische grafische Form (Logikschaltbild)
- 80: zweite exemplarische grafische Form (Ablaufdiagramm)
- 90: exemplarisches Vorgehen bei Erstellung von Programmcode
- 92: exemplarisches Rohrleitungs- und Instrumentenfließschema
- 94: Betreiber
- 96: matrixähnliches zweidimensionales Datenformat
- 98: Anbieter von Automatisierungssystemen
- 100: Drittanbieter
- 102: automatisches Generieren von Programmcode

## Patentansprüche

1. Verfahren zum Generieren von Programmcode aus einem computerlesbaren zweidimensionalen matrixähnlichen Datenformat (10, 60, 96), bei welchem jeweilige Ursachen (18) längs der ersten Dimensionsrichtung (12) und jeweilige Wirkungen (20) längs der zweiten Dimensionsrichtung (14) vorgesehen sind, wobei jede Wirkung (20) nur einmalig vorgesehen ist, wobei eine logische Beziehung zwischen Ursache (18) und Wirkung (20) sich aus einem dem jeweiligen Kreuzungspunkt (16) zwischen jeweiligen Zeilen und Spalten des matrixähnlichen Datenformates (10, 60, 96) zugeordneten Zuordnungsblock (50, 65, 66) ergibt, wobei ein Zuordnungsblock (50, 65, 66) eine logische Vorverarbeitung (30, 70) beinhalten kann, wobei in diesem Fall eine mehrschichtige (52, 54, 56; 62) Zuordnung zwischen Ursache (18) und Wirkung (20) vorgenommen ist, bei der in der letzten Schicht (52) ein Werteelement vorgesehen ist, das mit der jeweiligen Wirkung (20) verknüpft ist und das logisch mit wenigstens einem Werteelement in wenigstens einer darunterliegenden Zwischenschicht (54, 56, 62) verbunden ist, wobei in der ersten Zwischenschicht (56) wenigstens ein Werteelement vorgesehen ist, welchem eine der Ursachen (18) als Eingangsgröße zugeführt ist, wobei eine Rechenvorrichtung zur Durchführung des Verfahrens vorgesehen ist,
**gekennzeichnet durch** folgende Schritte:
• sequentielles Überprüfen der Zuordnungsblöcke (50, 65, 66) der Wirkungen (20) des matrixähnlichen Datenformates (10, 60, 96), zu welchen Ursachen (18) ein jeweiliger Zusammenhang gegeben ist,
• für den Fall, dass ein direkter Zusammenhang besteht:
• Erstellen eines Programmbausteines mit direkter Verknüpfung zwischen Ursache (18) und Wirkung (20),
• für den Fall, das ein logisch verknüpfter Zusammenhang besteht:
• Analysieren des jeweiligen Zuordnungsblockes (50, 65, 66) beginnend mit dem Werteelement der letzten Schicht (52),
• Überprüfen, von welchen Eingangsgrößen (32, 34) und jeweiligen logischen Bedingungen (36, 38) dieses Werteelement abhängt,
• Erstellen eines entsprechend verknüpften Programmbausteines für jede logische Bedingung (36, 38), wobei die jeweilige logische Bedingung **durch** die Art des Programmbausteins berücksichtigt ist,
• Überprüfung, von welchen Eingangsgrößen (32, 34) und jeweiligen logischen Bedingungen (36, 38) die Werteelemente in der darunterliegenden Zwischenschicht abhängig sind,
• Erstellen eines entsprechend verknüpften Programmbausteines für jede logische Bedingung (36, 38), wobei die jeweilige logische Bedingung **durch** die Art des Programmbausteins berücksichtigt ist,
• Wiederholung bis die erste Zwischenschicht (56) erreicht ist,
• Abspeichern der Programmbausteine als Programmcode

2. Verfahren nach Anspruch 1, **dadurch gekennzeichnet, dass** der Ausgang des Werteelementes der letzten Schicht (52) wenigstens eines Zuordnungsblocks (50, 65, 66) als zusätzliche Ursache (18) in dem matrixähnlichen Datenformat (10, 60, 96) bereitgestellt ist.

3. Verfahren nach einem der Ansprüche 1 oder 2, **dadurch gekennzeichnet, dass** wenigstens einer der Programmbausteine aus einer Programmbausteinbibliothek entnommen wird.

4. Verfahren nach einem der vorherigen Ansprüche, **dadurch gekennzeichnet, dass** die Programmbausteinbibliothek wenigstens eine der logischen Verknüpfungen "UND", "ODER", "EXCLUSIV ODER", "NICHT", "Addition", "Subtraktion", "Multiplikation", "Division" oder "Zeitverzug" beinhaltet.

5. Verfahren nach einem der vorherigen Ansprüche, **dadurch gekennzeichnet, dass** das computerlesbare zweidimensionale matrixähnliche Datenformat (10, 60, 96) zumindest in seiner Grundstruktur mittels eines grafischen Editors erzeugt wird.

6. Verfahren nach Anspruch 5, **dadurch gekennzeichnet, dass** das computerlesbare zweidimensionale matrixähnliche Datenformat (10, 60, 96) mittels eines Texteditors manipuliert wird.

7. Verfahren nach einem der Ansprüche 5 oder 6, **dadurch gekennzeichnet, dass** aus dem computerlesbaren zweidimensionalen matrixähnlichen Datenformat eine editierbare grafische Form (70, 80) erzeugt wird.

8. Verfahren nach Anspruche 7, **dadurch gekennzeichnet, dass** die editierbare grafische Form (70, 80) über den Zwischenschritt der Generierung von Programcode erzeugt wird.

9. Verfahren nach einem der Ansprüche 7 oder 8, **dadurch gekennzeichnet, dass** in der editierbaren grafischen Form (70, 80) Änderungen vorgenommen werden.

10. Verfahren nach einem der Ansprüche 5 bis 9, **dadurch gekennzeichnet, dass** die dort genannten Schritte bedarfsweise so lange wiederholt werden, bis alle gewünschten Ursachen (18), Wirkungen (20) und Zuordnungsblöcke (50, 65, 66) des matrixähnlichen Datenformates (10, 60, 96) definiert sind.

11. Verfahren nach einem der vorangegangenen Ansprüche, **dadurch gekennzeichnet, dass** die Zuordnungsblöcke (50, 65, 66) mit ihren Schichten (52, 54, 56; 62) in das zweidimensionale matrixähnliche Datenformat (10, 60, 96) integriert sind.
